# EUROPÄISCHE PATENTSCHRIFT

(11) **EP 3 242 345 B1**
(45) Veröffentlichungstag und Bekanntmachung des Hinweises auf die Patenterteilung: **08.01.2020**
(21) Anmeldenummer: 16168049.1
(22) Anmeldetag: 03.05.2016
(51) Int. Cl.: H01M 2/02, H01M 4/134, H01M 4/38, H01M 6/08, H01M 2/06, H01M 6/14

(54) **LITHIUM-BATTERIE**
LITHIUM BATTERY
BATTERIE AU LITHIUM

(43) Veröffentlichungstag der Anmeldung: 08.11.2017
(73) Patentinhaber: VARTA Microbattery GmbH, 73479 Ellwangen Jagst (DE)
(72) Erfinder: Gaugler, Winfried, 73479 Ellwangen (DE); Siwek, Hanna, 73479 Ellwangen (DE); Kreidler, Bernd, 73479 Ellwangen (DE)
(74) Vertreter: Patentanwaltskanzlei Cartagena

(56) Entgegenhaltungen:
- DE-A1- 3 240 806
- DE-A1- 3 409 584
- US-A1- 2008 085 451

## Beschreibung

Die im Folgenden beschriebene Erfindung betrifft eine Batterie mit einer als Hohlzylinder ausgebildeten, einen Hohlraum definierenden positiven Elektrode und einer in dem Hohlraum angeordneten Elektrode entgegengesetzter Polarität.

Der Begriff "Batterie" meinte ursprünglich mehrere in Serie geschaltete elektrochemische Zellen. Heute werden jedoch sehr häufig auch unter einzelnen elektrochemischen Zellen (Einzelzellen) Batterien verstanden.

Bei Batterien der eingangs genannten Bauart handelt es sich häufig um Zellen, bei denen ein Alkalimetall, insbesondere Lithium, als Aktivmaterial in der negativen Elektrode verwendet wird. Beispiele für Batterien mit negativer Lithium-Elektrode sind die Lithium-Thionylchlorid-Batterie, die Lithium-Schwefeldioxid-Batterie, die Lithium-Kohlenstoffmonofluorid-Batterie, die Lithium-Eisensulfid-Batterie und die Lithium-Mangandioxid-Batterie. Als positive Elektroden kommen im Fall der letztgenannten Lithium-Mangandioxid-Batterie Mangandioxid-Elektroden, Eisendisulfid-Elektroden im Fall einer Lithium-Eisensulfid-Batterie und im Fall einer Lithium-Schwefeldioxid-Batterie in Acetonitril gelöstes Schwefeldioxid (absorbiert in einer Inertelektrode) zum Einsatz. Die positiven Elektroden sind dabei in vielen Fällen als Hohlzylinder ausgebildet. Im Inneren der positiven Elektrode ist die negative Lithium-Elektrode angeordnet, ummantelt von einem Separator, der die positive Elektrode von der negativen Elektrode trennt, dabei jedoch einen Ionentransport zwischen den beiden Elektronen zulässt. Der Ionentransport wird dabei in der Regel durch Einsatz eines geeigneten Elektrolyten gewährleistet. Für Batterien mit Lithium-Elektroden eignen sich insbesondere Elektrolyte, bei denen ein Salz wie beispielsweise Lithium-Hexafluorophosphat in einem organischen Lösungsmittel, beispielsweise in einem Carbonat, gelöst ist.

Die elektrische Kontaktierung der positiven Elektrode stellt in der Regel kein Problem dar. Üblicherweise steht ihre Außenseite direkt mit der Innenwand eines elektrisch leitenden Batteriegehäuseteils in Kontakt. Die elektrische Kontaktierung kann entsprechend über dieses Gehäuseteil erfolgen. Aufwändiger ist dagegen die Kontaktierung der negativen Elektrode. Hierfür kommt klassisch ein Stift zum Einsatz, der an einem Ende konisch zugespitzt ist und am anderen Ende einen Flansch trägt, der bei der Gehäuseabdichtung eine Rolle spielt. Ein typisches Beispiel für einen solchen Stromableiter findet sich in der DE 32 40 806 A1. Ein alternatives Beispiel für einen Stromableiter findet sich in der DE 3409584 A.

Ein bei den beschriebenen Batterien immer wieder auftretendes Problem ist das Auftreten interner Kurzschlüsse. Im Elektrolyten gelöste Lithium-Ionen können sich unter Dendritenbildung auf dem negativen Stromableiter abscheiden. Diese Dendritenbildung ist insbesondere dann ein Problem, wenn innerhalb einer Batterie Temperaturunterschiede auftreten, beispielsweise in Folge einer lokalen Erwärmung durch eine externe Wärmequelle oder in Folge einer lokalen Abkühlung, wenn ein Teil der Batterie in unmittelbarem Kontakt mit einem guten Wärmeleiter steht. Die Dendriten wachsen mit der Zeit und können ab einer gewissen Größe mit der positiven Elektrode in unmittelbaren Kontakt treten, was die genannten Kurzschlüsse verursacht.

Eine bekannte Lösung dieses Problems besteht darin, die negative Elektrode in Form eines Hohlzylinders zu verbauen. Zu Lithium-Abscheidungen kommt es dann vor allem im Inneren des Hohlzylinders. Hierdurch wird einer Kurzschluss-Problematik wirksam entgegengetreten, das grundsätzliche Problem der Abscheidung von Lithium aus dem Elektrolyten auf negativen Stromableitern wird aber nicht gelöst. Zudem wirkt sich die beschriebene Maßnahme negativ auf die Energiedichte betroffener Batterien aus.

Der nachfolgend beschriebenen Erfindung lag die Aufgabe zugrunde, eine Lösung für das genannte Problem zu finden.

Diese Aufgabe wird gelöst durch die Batterie mit den Merkmalen des Anspruchs 1. Bevorzugte Ausführungsformen der erfindungsgemäßen Batterie sind in den abhängigen Ansprüchen 2 bis 7 angegeben.

Bei der erfindungsgemäßen Batterie handelt es sich um eine Lithium-Batterie, die wie die eingangs beschriebenen gattungsgemäßen Batterien stets eine als Hohlzylinder ausgebildete, einen Hohlraum definierende positive Elektrode sowie eine in dem Hohlraum angeordnete negative Elektrode aufweist. Zwischen der positiven und der negativen Elektrode ist ein Separator angeordnet. Umschlossen werden die positive Elektrode samt der in dem Hohlraum angeordneten negativen Elektrode und dem Separator von einem in der Regel mindestens zweiteiligen Gehäuse. Dieses weist einen Innenraum auf, in dem die Elektroden und der Separator angeordnet sind.

Zur elektrischen Kontaktierung der Elektroden ist für die negative Elektrode ein erster Stromableiter vorgesehen, für die positive Elektrode ein zweiter Stromableiter. Als zweiter Stromableiter für die positive Elektrode dient ein Teil des Gehäuses, das sie umschließt. Als erster Stromableiter für die negative Elektrode ist erfindungsgemäß ein Stift vorgesehen. Dieser weist einen ersten, endständigen Abschnitt auf, der vollständig in der negativen Elektrode versenkt ist, und innerhalb des Gehäuses einen zweiten Abschnitt, der nicht in unmittelbarem Kontakt mit der negativen Elektrode steht und der sich unmittelbar an den ersten Abschnitt anschließt.

Bevorzugt besteht der Stift aus Stahl, insbesondere aus einem Edelstahl. In einigen Ausführungsformen kann er auch einen bevorzugt geschlossenen Überzug aus Nickel oder aus einer Nickellegierung aufweisen.

In bevorzugten Ausführungsformen weist der Stift zwei Enden auf, von denen eines als konisch zulaufende Spitze ausgebildet ist und das andere einen Flansch aufweist. Die konisch zulaufende Spitze weist der Stift bevorzugt am freien Ende des ersten endständigen Abschnitts auf. Der zweite Abschnitt befindet sich bevorzugt zwischen dem Flansch und dem ersten, endständigen Abschnitt.

Auf seiner Außenseite kann der Stift ein Gewinde tragen, insbesondere im Bereich des ersten, endständigen Abschnitts.

Wenn der Stift ein Gewinde trägt, dann ist es bevorzugt, dass der Stift an Stelle des Flansches einen Kopf sowie aus diesem heraustretend einen Schaft aufweist, der wiederum einen Bereich aufweist, der das Gewinde trägt. Der Kopf weist bevorzugt eine Ober- und eine Unterseite auf. In Weiterbildung ist es bevorzugt, dass der Schaft auf der Unterseite aus dem Kopf heraustritt und die Oberseite flach ausgebildet ist.

Bei dem das Gewinde tragenden Bereich handelt es sich im Sinne obiger Definition bevorzugt um den ersten, endständigen Abschnitt des Stifts. Besonders bevorzugt ist also der das Gewinde tragende Bereich des Schafts vollständig in der negativen Elektrode versenkt. Bei dem zweiten Abschnitt des Stifts handelt es sich dann bevorzugt um den Bereich des Schafts zwischen dem Kopf und dem ersten, endständigen Abschnitt.

Besonders zeichnet sich die erfindungsgemäße Batterie dadurch aus, dass sie ein Isolatorelement aufweist, das den zweiten Abschnitt vor einem unmittelbaren Kontakt mit dem Elektrolyten schützt.

Das Isolatorelement besteht bevorzugt aus einem elektrisch nicht leitenden Material, insbesondere aus einem elektrisch nicht leitenden Kunststoff, der undurchdringlich für den in der Batterie enthaltenen Elektrolyten ist. Bevorzugt besteht das Isolatorelement aus einem porenfreien Kunststoff. Geeignete Kunststoffe sind beispielsweise Polypropylen (PP), Polyphenylensulfid (PPS) und Polyetheretherketon (PEEK). Gegebenenfalls können auch mehrlagige Folien verwendet werden, beispielsweise Folien aus zwei Lagen PP und einer dazwischen angeordneten Lage Polyamid (PA).

Besonders bevorzugt handelt es sich bei dem Isolatorelement um eine Hülse, die durch Spritzguss oder durch Tiefziehen, beispielsweise aus einer Folie aus einem der genannten Kunstoffmaterialien, gefertigt werden kann.

In einer alternativen Ausführungsform kann es sich bei dem Isolatorelement auch um eine elektrisch nicht leitende Beschichtung, insbesondere um einen elektrisch nicht leitenden Lack, handeln.

Idealerweise liegt das Isolatorelement eng an der Oberfläche des Stifts in dem zweiten Abschnitt an. Zu diesem Zweck sind Größe und Form des Isolatorelements bevorzugt exakt auf die Form und Dimension des verwendeten Stifts abgestimmt.

In einer besonders bevorzugten Ausführungsform ist der Separator als geschlossenes Behältnis ausgebildet, das die negative Elektrode vollständig umschließt und lediglich eine Durchbrechung für den ersten Stromableiter aufweist. Der Separator kann dabei mit dem Isolatorelement fest verbunden sein, beispielsweise durch Verschweißung oder Verklebung.

Bei dem Separator handelt es sich um eine poröse Hülse aus einem Kunststoff, beispielsweise aus Polypropylen. Besonders bevorzugt besteht der Separator aus einem oder mehreren Vliesstoff-Teilen.

Das Gehäuse einer erfindungsgemäßen Batterie besteht in der Regel aus mehreren Einzelteilen. Üblicherweise umfasst es
- ein erstes becherförmiges Gehäuseteil mit einem stirnseitigen Gehäuseboden, einem umlaufenden Gehäusemantel und einer dem Gehäuseboden gegenüberliegenden stirnseitigen Öffnung, sowie
- ein zweites, die stirnseitige Öffnung des ersten Gehäuseteils verschließendes Gehäuseteil.

In aller Regel bestehen die Gehäuseteile aus Metall, beispielsweise aus Stahlblech.

In einer bevorzugten Ausführungsform ist das zweite Gehäuseteil scheibenförmig ausgebildet und der der erste Stromableiter ist elektrisch mit dem zweiten Gehäuseteil verbunden, insbesondere durch Verschweißung. Es ist dann meist bevorzugt, dass das zweite Gehäuseteil als negativer Abgriffspol der erfindungsgemäßen Batterie dient. Benötigt wird dann jedenfalls eine elektrisch isolierende Dichtung, die zwischen dem ersten und dem zweiten Gehäuseteil angeordnet wird.

In einer weiteren bevorzugten Ausführungsform ist das zweite Gehäuseteil scheibenförmig ausgebildet und weist eine Durchbrechung auf, durch welche der erste Stromableiter aus dem Gehäuseinneren nach außen geführt ist. In diesem Fall ist es besonders bevorzugt, dass das Gehäuse eine elektrisch isolierende Dichtung aufweist, die einen Kontakt zwischen dem ersten Stromableiter und dem zweiten Gehäuseteil unterbindet. Der nach außen geführte Teil des Stromableiters kann dann selbst als negativer Abgriffspol der erfindungsgemäßen Batterie dienen.

Es ist bevorzugt, dass die hohlzylindrisch ausgebildete positive Elektrode in unmittelbarem Kontakt mit dem ersten Gehäuseteil steht, insbesondere großflächig direkt an diesem anliegt. Bevorzugt dient das erste, becherförmige Gehäuseteil als positiver Abgriffspol der erfindungsgemäßen Batterie.

Insbesondere aus produktionstechnischen Gründen wird die als Hohlzylinder ausgebildete positive Elektrode in aller Regel nicht einstückig in das becherförmige Gehäuseteil eingebracht, sondern in Form von einzelnen Segmenten, die zusammengesetzt die positive Elektrode bilden. Es ist entsprechend bevorzugt, dass sich die positive Elektrode aus mindestens zwei ringförmigen Einzelsegmenten zusammensetzt, die über erste Kontaktflächen flächig aneinandergrenzen und über zweite Kontaktflächen an dem ersten Gehäuseteil anliegen. Beispielsweise können in dem becherförmigen Zellgehäuse zwei oder mehr ringförmige Segmente aufeinander gestapelt werden. In diesem Fall bestimmt der Innendurchmesser der ringförmigen Segmente das Volumen und den Durchmesser des Hohlraums für die negative Elektrode. Der Außendurchmesser der ringförmigen Segmente ist in der Regel exakt auf den entsprechenden Innendurchmesser des becherförmigen ersten Gehäuseteils abgestimmt.

Die beschriebenen sowie weitere Merkmale der erfindungsgemäßen Batterie ergeben sich auch aus der nun folgenden Beschreibung der in der Zeichnung dargestellten bevorzugten Ausführungsform in Verbindung mit den Unteransprüchen. Dabei können einzelne Merkmale der Erfindung für sich allein oder in Kombination miteinander verwirklicht sein. Die beschriebenen Ausführungsformen dienen lediglich zur Erläuterung und zum besseren Verständnis der Erfindung und sind in keiner Weise einschränkend zu verstehen.

### Figurenbeschreibung

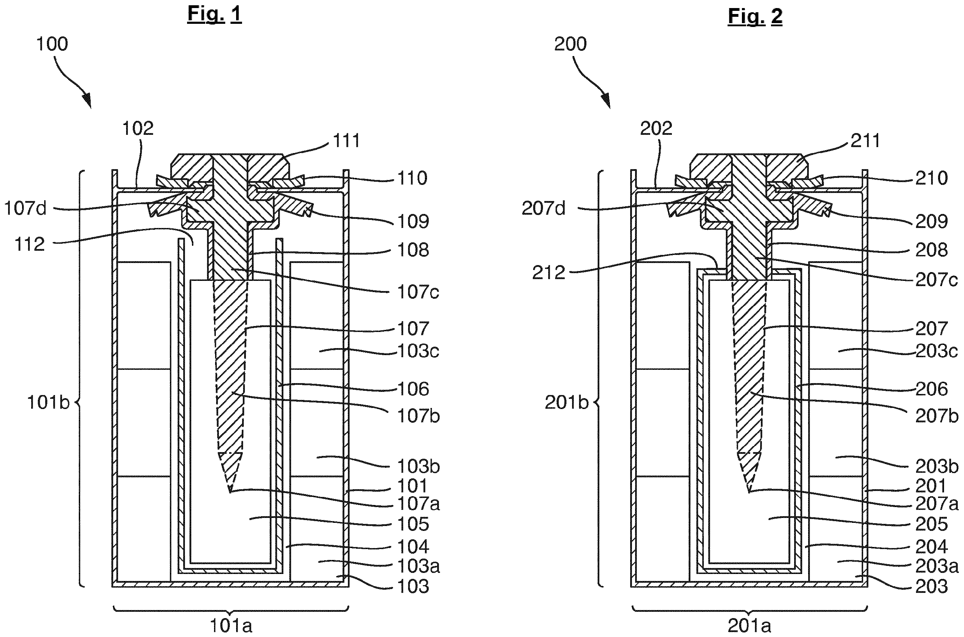

Die in **Fig. 1** und **Fig. 2** dargestellten schematischen Abbildungen (Längsschnitt) dienen der Erläuterung zweier bevorzugter Ausführungsformen einer erfindungsgemäßen Batterie.

Die in **Fig. 1** dargestellte Batterie **100** weist ein Gehäuse aus einem becherförmigen Gehäuseteil **101** und einem scheibenförmigen Gehäuseteil **102** auf. Das Gehäuseteil **101** umfasst einen ebenen, kreisförmig ausgebildeten Boden **101a** und einen zylindrischen Mantel **101b**. Stirnseitig weist das Gehäuseteil **101** eine kreisrunde, dem Boden **101a** gegenüber liegende Öffnung auf. Diese ist mittels des scheibenförmigen Gehäuseteils **102** verschlossen.

Im Inneren des Gehäuses ist die als Hohlzylinder ausgebildete positive Elektrode **103** angeordnet, die aus drei Einzelsegmenten **103a** bis **103c** zusammengesetzt ist. Die positive Elektrode **103** besteht im Wesentlichen aus Mangandioxid. Die Einzelsegmente **103a** bis **103c** sind jeweils ringförmig ausgebildet und weisen einen jeweils identischen Außen- und Innendurchmesser auf. Innerhalb des Gehäuseteils **101** sind sie stapelförmig angeordnet und definieren in ihrem Zentrum den Hohlraum **104.** In diesem ist die aus metallischem Lithium (einem Strang aus Lithiummetall) bestehende negative Elektrode **105** angeordnet, die von einem becherförmigen Separator **106** umgeben ist. Letzterer trennt die Elektroden **103** und **105** voneinander. Bei dem Separator **106** handelt es sich um eine Hülse aus einem Vliesstoff aus Kunststofffasern, beispielsweise aus Polypropylen. An ihrem oberen Ende **112** ist die Hülse offen.

Die innerhalb des Hohlraums **104** angeordnete negative Elektrode **105** wird durch den stiftförmigen Stromableiter **107** kontaktiert. Dieser weist einen ersten, endständigen Abschnitt **107b** auf, der vollständig in der negativen Elektrode **105** versenkt ist, sowie einen zweiten Abschnitt **107c,** der nicht unmittelbar mit der negativen Elektrode **105** in Kontakt steht. Weiterhin weist der Stromableiter **107** die konisch zulaufende Spitze **107a** und den Flansch **107d** auf.

Das scheibenförmige Gehäuseteil **102** weist eine zentrale Durchbrechung auf, durch die der Stromableiter **107** aus dem Gehäuseinneren nach außen geführt ist. Um einen elektrischen Kontakt zwischen dem Stromableiter **107** und dem Gehäuseteil **102** zu verhindern, sind zwischen dem Gehäuseteil **102** und dem Stromableiter **107** die elektrisch isolierenden Dichtungen **109** und **110** angeordnet. Letztere schirmt auch das in der Regel aus Metall bestehende Klemmelement **111** vom Gehäuseteil **102** ab.

Im Bereich des zweiten Abschnitts **107c** könnte im Innenraum des aus den Gehäuseteilen **101** und **102** bestehenden Gehäuses befindlicher Elektrolyt mit dem Stromableiter **107** unmittelbar in Kontakt treten. Dies wird jedoch durch das Isolatorelement **108** wirksam verhindert. Bei dem Isolatorelement **108** handelt es sich um eine passgenaue Hülse aus Kunststoff, die auf den Stromableiter **107** aufgezogen ist. Diese überdeckt den Stromableiter **107** ausgehend von der Dichtung **109** bis zu dem Punkt, in dem er in die negative Elektrode **105** eintritt. In bevorzugten Ausführungsformen kann das Isolatorelement **108** mit der Dichtung **109** fest verbunden sein, beispielsweise durch Verschmelzung oder Verklebung.

Die in **Fig.** 2 dargestellte Batterie **200** weist ein Gehäuse aus einem becherförmigen Gehäuseteil **201** und einem scheibenförmigen Gehäuseteil **202** auf. Das Gehäuseteil **201** umfasst einen ebenen, kreisförmig ausgebildeten Boden **201a** und einen zylindrischen Mantel **201b.** Stirnseitig weist das Gehäuseteil **201** eine kreisrunde, dem Boden **201a** gegenüber liegende Öffnung auf. Diese ist mittels des scheibenförmigen Gehäuseteils **202** verschlossen.

Im Inneren des Gehäuses ist die als Hohlzylinder ausgebildete positive Elektrode **203** angeordnet, die aus drei Einzelsegmenten **203a** bis **203c** zusammengesetzt ist. Die positive Elektrode **203** besteht im Wesentlichen aus Mangandioxid. Die Einzelsegmente **203a** bis **203c** sind jeweils ringförmig ausgebildet und weisen einen jeweils identischen Außen- und Innendurchmesser auf. Innerhalb des Gehäuseteils **201** sind sie stapelförmig angeordnet und definieren in ihrem Zentrum den Hohlraum **204.** In diesem ist die aus metallischem Lithium (einem Strang aus Lithiummetall) bestehende negative Elektrode **205** angeordnet, die von einem becherförmigen Separator **206** umgeben ist. Letzterer trennt die Elektroden **203** und **205** voneinander. Bei dem Separator **206** handelt es sich um eine Hülse aus einem Vliesstoff aus Kunststofffasern, beispielsweise aus Polypropylen.

Im Gegensatz zu der in Fig. 1 dargestellten Ausführungsform ist die Hülse an ihrem oberen Ende **212** allerdings nicht offen. Stattdessen ist der Separator **206** hier als geschlossenes Behältnis ausgebildet, das die negative Elektrode **205** vollständig umschließt und lediglich eine Durchbrechung für den stiftförmigen Stromableiter **207** aufweist. Der Separator **206** kann mit dem Isolatorelement **208** fest verbunden sein, beispielsweise durch Verschweißung oder Verklebung.

Der Stromableiter **207** kontaktiert die innerhalb des Hohlraums **204** angeordnete negative Elektrode **205.** Der Stromableiter **207** weist einen ersten, endständigen Abschnitt **207b** auf, der vollständig in der negativen Elektrode **205** versenkt ist, sowie einen zweiten Abschnitt **207c,** der nicht unmittelbar mit der negativen Elektrode **205** in Kontakt steht. Weiterhin weist der Stromableiter **207** die konisch zulaufende Spitze **207a** und den Flansch **207d** auf.

Das scheibenförmige Gehäuseteil **202** weist eine zentrale Durchbrechung auf, durch die der Stromableiter **207** aus dem Gehäuseinneren nach außen geführt ist. Um einen elektrischen Kontakt zwischen dem Stromableiter **207** und dem Gehäuseteil **202** zu verhindern, sind zwischen dem Gehäuseteil **202** und dem Stromableiter **207** die elektrisch isolierenden Dichtungen **209** und **210** angeordnet. Letztere schirmt auch das in der Regel aus Metall bestehende Klemmelement **211** vom Gehäuseteil 202 ab.

Im Bereich des zweiten Abschnitts **207c** könnte im Innenraum des aus den Gehäuseteilen **201** und **202** bestehenden Gehäuses befindlicher Elektrolyt mit dem Stromableiter **207** unmittelbar in Kontakt treten. Dies wird jedoch durch das Isolatorelement **208** wirksam verhindert. Bei dem Isolatorelement **208** handelt es sich um eine passgenaue Hülse aus Kunststoff, die auf den Stromableiter **207** aufgezogen ist. Diese überdeckt den Stromableiter **207** ausgehend von der Dichtung **209** bis zu dem Punkt, in dem er in die negative Elektrode **205** eintritt. In bevorzugten Ausführungsformen kann das Isolatorelement **208** mit der Dichtung **209** fest verbunden sein, beispielsweise durch Verschmelzung oder Verklebung.

Batterien gemäß den in Fig. 1 und Fig. 2 dargestellten Ausführungsformen wurden einem Lagerungsversuch mit einem Temperaturgradienten (negative Elektrode wärmer als positive Elektrode) unterzogen. Bei diesen Bedingungen würde es typischerweise zu einer Lithiumabscheidung auf dem Stromableiter kommen. Auf den Stromableitern **107** und **207** konnten jedoch nach Abschluss des Versuchs keine Lithiumabscheidungen beobachtet werden.

## Patentansprüche

1. Lithium-Batterie (100; 200) mit den folgenden Merkmalen
a. Sie umfasst eine als Hohlzylinder ausgebildete, einen Hohlraum (104; 204) definierende positive Elektrode (103; 203),
b. Sie umfasst eine in dem Hohlraum (104; 204) angeordnete negative Elektrode (105; 205),
c. Sie umfasst einen zwischen der positiven und der negativen Elektrode (103, 105; 203, 205) angeordneten Separator (106; 206),
d. Sie umfasst einen flüssigen Elektrolyten, mit dem die Elektroden (103, 105; 203, 205) und der Separator (106; 206) getränkt sind,
e. Sie umfasst einen ersten Stromableiter (107; 207) für die negative Elektrode (105; 205),
f. Sie umfasst einen zweiten Stromableiter für die positive Elektrode (103; 203),
g. Sie umfasst ein mindestens zweiteiliges Gehäuse, das einen Innenraum umschließt, in dem die positive Elektrode (103; 203) samt der in dem Hohlraum (104; 204) angeordneten negativen Elektrode (105; 205) und dem Separator (106; 206) angeordnet sind,
h. Als erster Stromableiter (107; 207) ist innerhalb des Gehäuses ein Stift vorgesehen,
i. Als zweiter Stromableiter dient ein Teil des Gehäuses (101; 201),
j. Der Stift (107; 207) weist einen ersten, endständigen Abschnitt (107b; 207b) auf, der vollständig in der negativen Elektrode (105; 205) versenkt ist, und
k. Der Stift (107; 207) weist innerhalb des Gehäuses einen zweiten Abschnitt (107c; 207c) auf, der nicht in unmittelbarem Kontakt mit der negativen Elektrode (105; 205) steht und der sich unmittelbar an den ersten Abschnitt (107b; 207b) anschließt,
**dadurch gekennzeichnet, dass**
1. die Batterie ein Isolatorelement (108; 208), das einen unmittelbaren Kontakt des Elektrolyten mit dem zweiten Abschnitt (107c; 207c) unterbindet, umfasst.

2. Batterie nach Anspruch 1 mit mindestens einem der folgenden zusätzlichen Merkmale:
a. Das Isolatorelement (108; 208) besteht aus einem elektrisch nicht leitenden Kunststoff.
b. Bei dem Isolatorelement (108; 208) handelt es sich um eine Folie oder eine Hülse.
c. Bei dem Isolatorelement handelt es sich um eine Beschichtung, insbesondere um einen Lack.

3. Batterie nach Anspruch 1 oder Anspruch 2 mit mindestens einem der zusätzlichen Merkmale:
a. Der Separator (206) ist als geschlossenes Behältnis ausgebildet, das die negative Elektrode (205) vollständig umschließt und lediglich eine Durchbrechung für den ersten Stromableiter (207) aufweist.
b. Der Separator (206) ist mit dem Isolatorelement (208) durch Verschweißung oder Verklebung verbunden.

4. Batterie nach einem der vorhergehenden Ansprüche mit mindestens einem der zusätzlichen Merkmale:
a. Das Gehäuse umfasst ein erstes, becherförmiges Gehäuseteil (101; 201) mit einem stirnseitigen Gehäuseboden (101a; 201a), einem umlaufenden Gehäusemantel (101b; 201b) und einer dem Gehäuseboden (101a; 201a) gegenüberliegenden stirnseitigen Öffnung.
b. Das Gehäuse umfasst ein zweites, die stirnseitige Öffnung des ersten Gehäuseteils verschließendes Gehäuseteil (102; 202).

5. Batterie nach einem der vorhergehenden Ansprüche mit mindestens einem der zusätzlichen Merkmale:
a. Das zweite Gehäuseteil ist scheibenförmig ausgebildet und der der erste Stromableiter ist elektrisch mit dem zweiten Gehäuseteil verbunden, insbesondere durch Verschweißung.
b. Das Gehäuse weist eine elektrisch isolierende Dichtung auf, die zwischen dem ersten und dem zweiten Gehäuseteil angeordnet ist.

6. Batterie nach einem der Ansprüche 1 bis 4 mit mindestens einem der zusätzlichen Merkmale:
a. Das zweite Gehäuseteil (102; 202) ist scheibenförmig ausgebildet und weist eine (zentrale) Durchbrechung auf, durch welche der erste Stromableiter (107; 207) aus dem Gehäuseinneren nach außen geführt ist.
b. Das Gehäuse weist eine elektrisch isolierende Dichtung (109, 110; 209, 210) auf, die einen Kontakt zwischen dem ersten Stromableiter (107; 207) und dem zweiten Gehäuseteil (102; 202) unterbindet.

7. Batterie nach einem der vorhergehenden Ansprüche mit mindestens einem der zusätzlichen Merkmale:
a. Die hohlzylindrisch ausgebildete positive Elektrode (103; 203) steht in unmittelbarem Kontakt mit dem ersten Gehäuseteil (101; 201).
b. Die positive Elektrode (103; 203) setzt sich aus mindestens zwei ringförmigen Einzelsegmenten (103a, 103b, 103c; 203a, 203b, 203c) zusammen, die über erste Kontaktflächen flächig aneinandergrenzen und über zweite Kontaktflächen an dem ersten Gehäuseteil (101; 201) anliegen.

## Claims

1. Lithium battery (100; 200) having the following features
a. it comprises a positive electrode (103; 203) which is embodied as a hollow cylinder and defines a cavity(104; 204),
b. it comprises a negative electrode (105; 205) which is arranged in the cavity (104; 204),
c. it comprises a separator (106; 206) which is arranged between the positive and the negative electrode (103, 105; 203, 205),
d. it comprises a liquid electrolyte with which the electrodes (103, 105; 203, 205) and the separator (106; 206) are soaked,
e. it comprises a first current collector (107; 207) for the negative electrode (105; 205),
f. it comprises a second current collector for the positive electrode (103; 203),
g. it comprises an at least two-part housing which encloses an interior space in which the positive electrode (103; 203) together with the negative electrode (105; 205) in the cavity (104; 204) and with the separator (106; 206) are arranged,
h. a pin is provided as the first current collector (107; 207) inside the housing,
i. a part of the housing (101; 201) serves as the second current collector,
j. the pin (107; 207) has a first terminal section (107b; 207b) which is completely countersunk in the negative electrode (105; 205), and
k. the pin (107; 207) has a second section (107c; 207c) within the housing, which section is not in direct contact with the negative electrode (105; 205) and which is directly adjoined to the first section (107b; 207b)
**characterized in that**
1. the battery comprises an insulator element (108; 208) which prevents direct contact of the electrolyte with the second section (107c; 207c).

2. Battery according to Claim 1 having at least one of the following additional features:
a. the insulator element (108; 208) is composed of an electrically non-conductive plastic.
b. the insulator element (108; 208) is a film or a sleeve.
c. the insulator element is a coating, in particular a surface coating agent.

3. Battery according to Claim 1 or Claim 2, having at least one of the additional features:
a. the separator (206) is embodied as a closed container which completely encloses the negative electrode (205) and merely has a breakthrough for the first current collector (207).
b. the separator (206) is connected to the insulator element (208) by welding or bonding.

4. Battery according to one of the preceding claims, having at least one of the additional features:
a. the housing comprises a first, beaker-shaped housing part (101; 201) with an end-side housing base (101a; 201a), a circumferential housing casing (101b; 201b) and an end-side opening which lies opposite the housing base (101a; 201a).
b. the housing comprises a second housing part (102; 202) which closes off the end-side opening of the first housing part.

5. Battery according to one of the preceding claims having at least one of the additional features:
a. the second housing part is embodied in a disc shape and the first current collector is electrically connected to the second housing part, in particular by welding.
b. the housing has an electrically insulating seal which is arranged between the first and second housing parts.

6. Battery according to one of Claims 1 to 4 having at least one of the additional features:
a. the second housing part (102; 202) is embodied in a disc shape and has a (central) breakthrough through which the first current collector (107; 207) is led out of the interior of the housing towards the outside.
b. the housing has an electrically insulating seal (109, 110; 209, 210) which prevents contact between the first current collector (107; 207) and the second housing part (102; 202).

7. Battery according to one of the preceding claims having at least one of the additional features:
a. the positive electrode (103; 203) which is embodied in a hollow cylindrical fashion is in direct contact with the first housing part (101; 201).
c. the positive electrode (103; 203) is composed of at least two annular individual segments (103a, 103b 103c; 203a, 203b, 203c) which adjoin one another in a planar fashion via first contact faces and bear on the first housing part (101; 201) via second contact faces.

## Revendications

1. Batterie au lithium (100 ; 200) dotée des caractéristiques suivantes
a. elle comprend une électrode positive (103 ; 203) réalisée comme cylindre creux et définissant une cavité (104 ; 204),
b. elle comprend une électrode négative (105 ; 205) agencée dans la cavité (104 ; 204),
c. elle comprend un séparateur (106 ; 206) agencé entre les électrodes positive et négative (103, 105 ; 203, 205),
d. elle comprend un électrolyte liquide, lequel imprègne les électrodes (103, 105 ; 203, 205) et le séparateur (106 ; 206),
e. elle comprend un premier collecteur de courant (107 ; 207) pour l'électrode négative (105 ; 205),
f. elle comprend un deuxième collecteur de courant pour l'électrode positive (103 ; 203),
g. elle comprend un boîtier fait d'au moins deux parties, lequel entoure un espace intérieur, au sein duquel sont agencés l'électrode positive (103 ; 203) ainsi que l'électrode négative (105 ; 205) agencée dans la cavité (104 ; 204) et le séparateur (106 ; 206),
h. une tige est prévue à l'intérieur du boîtier comme le premier collecteur de courant (107 ; 207),
i. une partie du boîtier (101 ; 201) fait office du deuxième collecteur de courant,
j. la tige (107 ; 207) comporte une première section terminale (107b ; 207b), laquelle est entièrement enfouie dans l'électrode négative (105 ; 205), et
k. la tige (107 ; 207) comporte à l'intérieur du boîtier une deuxième section terminale (107c ; 207c), laquelle ne se trouve pas en contact direct avec l'électrode négative (105 ; 205) et se raccorde directement à la première section (107b ; 207b),
**caractérisée en ce que**
1. la batterie comprend un élément isolateur (108 ; 208), lequel empêche un contact direct de l'électrolyte avec la deuxième section (107c ; 207c).

2. Batterie selon la revendication 1 dotée d'au moins une des caractéristiques supplémentaires suivantes :
a. l'élément isolateur (108 ; 208) est constitué d'un plastique électriquement non conducteur.
b. on entend par élément isolateur (108 ; 208) un film ou un manchon.
c. on entend par élément isolateur un revêtement, en particulier un vernis.

3. Batterie selon la revendication 1 ou la revendication 2 dotée d'au moins une des caractéristiques supplémentaires :
a. le séparateur (206) est réalisé comme conteneur fermé, lequel entoure complètement l'électrode négative (205) et comporte une découpe uniquement pour le premier collecteur de courant (207).
b. le séparateur (206) est relié à l'élément isolateur (208) par soudure ou collage.

4. Batterie selon l'une des revendications précédentes dotée d'au moins une des caractéristiques supplémentaires :
a. le boîtier comprend une première partie de boîtier en forme de coupelle (101 ; 201) dotée d'un fond de boîtier frontal (101a ; 201a), d'une enveloppe de boîtier périphérique (101b ; 201b) et d'une ouverture frontale opposée au fond de boîtier (101a ; 201a).
b. le boîtier comprend une deuxième partie de boîtier (102 ; 202) fermant l'ouverture frontale de la première partie de boîtier.

5. Batterie selon l'une des revendications précédentes dotée d'au moins une des caractéristiques supplémentaires :
a. la deuxième partie de boîtier est réalisée en forme de disque et le premier collecteur de courant est électriquement relié à la deuxième partie de boîtier, en particulier par soudure.
b. le boîtier comporte un joint électriquement isolant, lequel est agencé entre la première et la deuxième partie de boîtier.

6. Batterie selon l'une des revendications 1 à 4 dotée d'au moins une des caractéristiques supplémentaires :
a. la deuxième partie de boîtier (102 ; 202) est réalisée en forme de disque et comporte une découpe (centrale), au travers de laquelle le premier collecteur de courant (107 ; 207) est guidé depuis l'intérieur du boîtier vers l'extérieur.
b. le boîtier comporte un joint électriquement isolant (109, 110 ; 209, 210), lequel empêche un contact entre le premier collecteur de courant (107 ; 207) et la deuxième partie de boîtier (102 ; 202).

7. Batterie selon l'une des revendications précédentes dotée d'au moins une des caractéristiques supplémentaires :
a. l'électrode positive (103 ; 203), réalisée comme cylindre creux, se trouve en contact direct avec la première partie de boîtier (101 ; 201).
b. l'électrode positive (103 ; 203) se compose d'au moins deux segments individuels annulaires (103a, 103b, 103c ; 203a, 203b, 203c), lesquels sont contigus par le biais de premières surfaces de contact et s'appuient sur la première partie de boîtier (101 ; 201) par le biais de deuxièmes surfaces de contact.
